Europäisches Patentamt

European Patent Office

Office européen des brevets

(11) Publication number: **0 328 235**
**A2**

## (12) EUROPEAN PATENT APPLICATION

(21) Application number: **89300134.7**

(22) Date of filing: **09.01.89**

(51) Int. Cl.⁴: **G06F 11/00 , G06F 1/00 , B60K 28/00**

(30) Priority: **10.02.88 GB 8803044**

(43) Date of publication of application:
**16.08.89 Bulletin 89/33**

(84) Designated Contracting States:
**BE DE ES FR GB IT SE**

(71) Applicant: **SALPLEX LIMITED**
**Boughton Road**
**Rugby Warwickshire CV21 1BU(GB)**

(72) Inventor: **Greenwood, Jeremy John**
**269 Boldmere Road**
**Sutton Coldfield West Midlands(GB)**

(74) Representative: **Sperling, David**
**Central Patent Dept. (Wembley Office) The**
**General Electric Company plc Hirst**
**Research Centre East Lane**
**Wembley Middlesex HA9 7PP(GB)**

(54) **Information handling and control systems.**

(57) A multiplex system for automotive vehicle electrical systems has a central unit (10) with processing and control means (11) and remote units (20) with power switches (26) for operating loads (70-72). In normal operation the processing and control means (11) controls the switches (26) via signalling links (40). Fault protection is provided by first monitoring means (12) at the control unit to detect failure of the processing and control means (11) and enable first override means (13) at the central unit to cause a default signal to be applied to the links (40). Second monitoring means (80) at a remote unit (20) detects the default signal and enables second override means (90) to set one or more loads to a predetermined safe state either on (70, 71) or off (72).

Fig 2a.

Fig 2b.

## Information handling and control systems

This invention relates to information handling and control systems, for example for inclusion in automotive vehicle electrical systems.

In particular this invention relates to an information handling and control system comprising a central unit and a plurality of remote units each connected to the central unit by a respective signalling link, wherein the central unit includes processing and control means, wherein the remote units each include at least one power switching means each for operating a respective load, and wherein in normal operation of the system the processing and control means controls all the power switching means via the signalling links.

An example of such a system in the form of an automotive vehicle electrical system is known from the article "Multiplexing for the automotive industry" by W.R. Betts in GEC REVIEW, Vol.2, No.1, 1986 at pages 32 to 36.

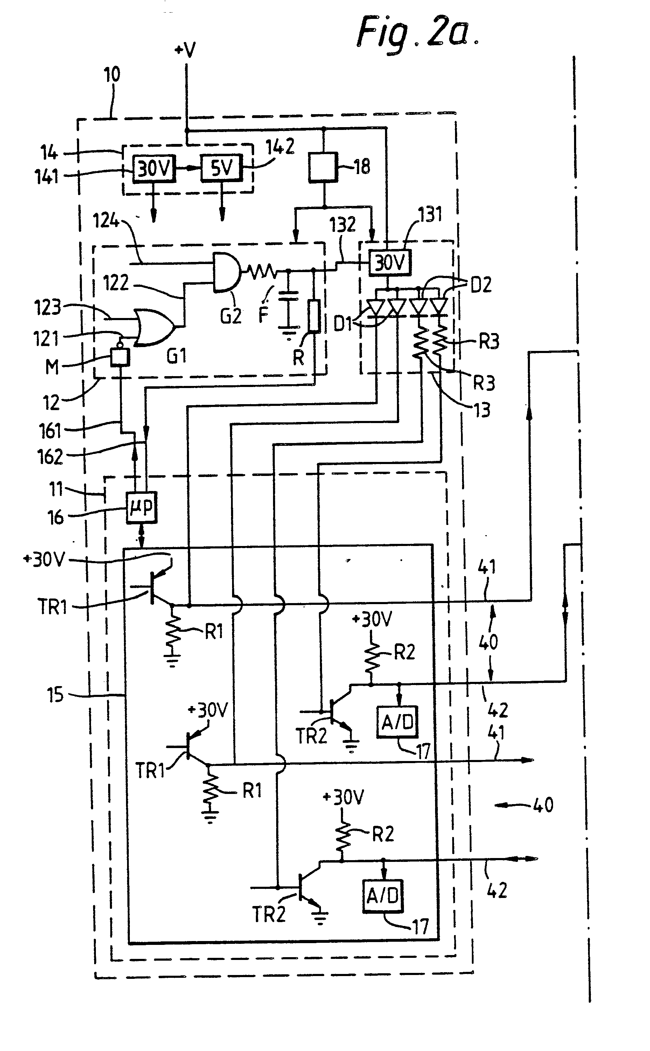

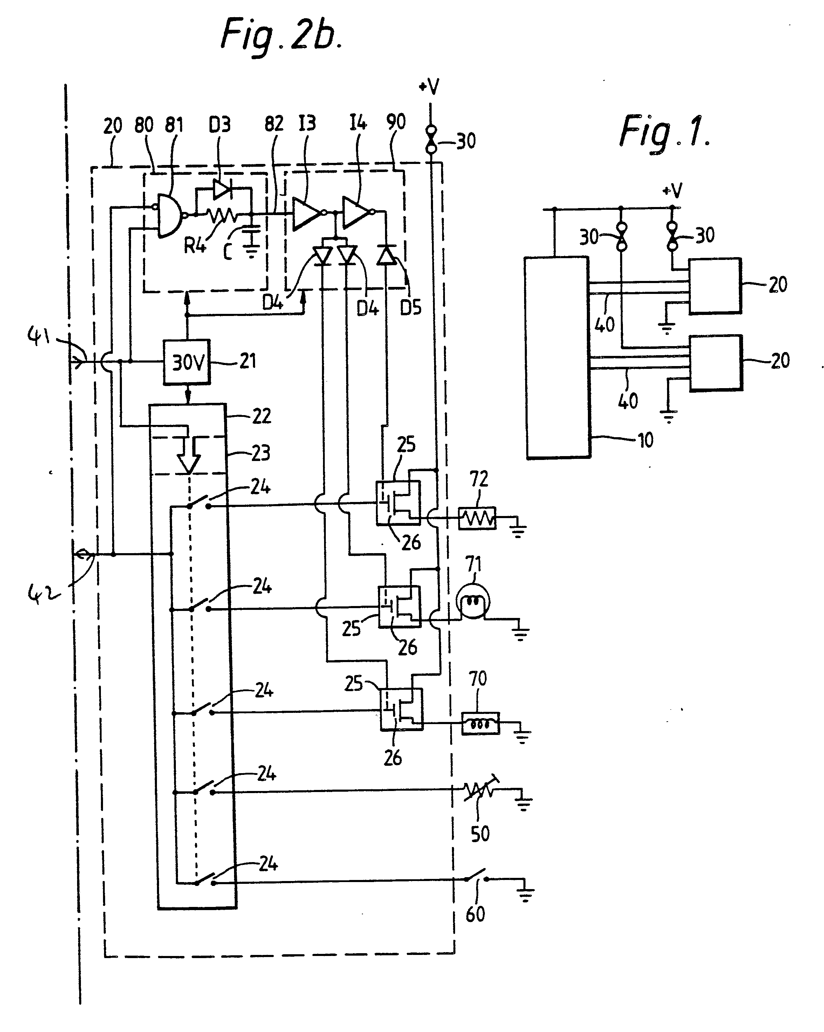

Figure 1 of the accompanying drawings is an overall schematic diagram corresponding to the Figure shown on page 34 of the GEC REVIEW article.

In Figure 1 there is shown a star wired system with an intelligent, central, master unit 10 and a number of non-intelligent, remote, slave units 20. Power from a battery +V is supplied to the master unit 10 and via fuses 30 to the slave units 20. A low current signalling link 40 is connected from the master unit 10 to each slave unit 20. Electrical switches, sensors, and high current loads (not shown in figure 1) are connected to the slave units 20 and their interaction is controlled from the master unit 10 by means of time slot assignment multiplex.

In the GEC REVIEW article on page 34 some details of the master unit are shown in a block diagram. This diagram shows a microprocessor connected to operate and interact with clock drive and bus interface circuits. The battery volts are shown connected to power supplies for the microprocessor and to these circuits. A block labelled "watchdog" is shown interconnected with a reset input of the microprocessor, and a block labelled "defaults inverter" is shown connected to the battery volts and to the "watchdog". Although there is no descriptive text referring to the watchdog and defaults inverter circuits, they clearly indicate the provision of a conventional basic level of fault protection covering resettable program errors in the single microprocessor and power supply failure.

In information handling and control systems of the type to which this invention relates, it may be desirable to provide more than the basic level of fault protection such as is disclosed in the GEC REVIEW article. A conventional method of fault protection for computer controlled systems is fully to duplicate the computer, which is of course expensive. We have considered providing a system of the type disclosed in the GEC REVIEW article in which the master unit has two microprocessors arranged with each microprocessor controlling a different 40% of the remote unit loads and the two microprocessors each able to control the remaining 20% (critical) remote unit loads, so that if a fault occurs in one of the microprocessors then the other microprocessor operates 60% of the loads including the critical loads. This is less expensive than full duplication of the microprocessor functions, but even so there will be the possibility that both microprocessors can fail with the result that the critical loads are not controlled.

An object of the present invnetion is to overcome the disadvantages, as mentioned, in the above-described proposals for fault protection.

According to the invention there is provided an information handling and control system comprising a central unit and a plurality of remote units each connected to the central unit by a respective signalling link, wherein the central unit includes processing and control means, wherein the remote units each include at least one power switching means each for operating a respective load, and wherein in normal operation of the system the processing and control means controls all the power switching means via the signalling links, characterised in that the central unit includes first monitoring means for detecting a predetermined failure condition of means within the central unit, said failure condition indicating failure of normal operation of the processing and control means, the central unit includes first override means for causing a default signal to be applied to each signalling link when enabled by the first monitoring means responsive to said failure condition detection, each remote unit includes respective second monitoring means for detecting the default signal on the respective signalling link, and each remote unit includes respective second override means for setting at least one said power switching means at that remote unit to a predetermined state when enabled by the second monitoring means responsive to said default signal detection.

The basic idea of the invention is to provide extra hardware, the monitoring means and override means, at the central unit and at the remote units so that in the event of a failure being detected by the extra hardware at the central unit then, via the signalling links, the extra hardware at the remote units sets the loads to a predetermined state. One advantage of this arrangement is that failure of a number of different means in the central unit which contribute to normal operation of the processing and control means may be catered for, whether it be a microprocessor or a circuit operated by the microprocessor or a power supply. Another advantage of this arrangement is that any number of the loads, possibly all of them, which are controlled by the central unit processing and control means in normal operation of the system may be considered as critical loads which can be put into a predetermined safe state, either on or off, upon failure of normal operation. For example in an automotive vehicle electrical system it could be sufficient to provide that if normal operation of the system fails, then the engine ignition feed, headlights, tail lights, and possible the windscreen wipers are maintained on, and possibly also the fuel pump is maintained off, so that the vehicle may be safely taken to the side of the road.

The system according to the invention may be of the type disclosed in the above-mentioned GEC REVIEW in so far as the system is operable by battery means when connected to the central unit and to the remote units, and the central unit includes power supply means for operating the processing and control means in normal operation of the system. In this case, in order to take care of the possibility that one reason for the processing and control means failing to operate normally may be failure of its power supply, the first override means may include further power supply means which are turned on by the first monitoring means responsive to said failure condition detection.

The system according to the invention may be of the type disclosed in the above-mentioned GEC REVIEW in so far as during normal operation of the system the processing and control means applies to each signalling link successive voltage conditions each selected from a set of normal voaltage conditions. In this case the default signal may consist of a predetermined one of the normal voltage conditions having at least a predetermined duration which is longer than can occur during normal operation of the system, each second monitoring means including detecting and timing means responsive to the presence on the respective signalling link of said predetermined one of the normal voltage conditions for said predetermined duration. It is best if each signalling link consists of a small number of lines, for example two, to each of which a small number of voltages may be applied, for example high and low. In this case there are a limited number of voltage conditions available for the signalling link and it is advantageous if all of them may be used in normal operation of the system with one of them also providing the default signal when applied for a predetermined duration.

In the system described in the GEC REVIEW article, each signalling link includes a clock pulse data line, and in normal operation of the system of the processing and control means applies bursts of clock pulses to the clock pulse data lines with a normal interval between said bursts. These clock pulse bursts are used to access the channels at each slave unit by means of time slot assignment multiplex. The system according to the invention may use clock pulse bursts in a similar manner, in which case it will be convenient for said predetermined duration associated with the default signal to be longer than said normal interval between clock pulse burst.

In a system according to the invention and as described in the preceding paragraph the first override means may cause said predetermined one of the normal voaltage conditions associated with the default signal to be continuously applied to each signalling link only for so long as the first monitoring means continuously detects said failure condition, and, upon restoration or normal operation of the processing and control means, the second monitoring means at each remote unit may disable the respective second override means responsive to the absence on the respective signalling link of said predetermined one of the normal voltage conditions. The advantage of this feature is that it simplifies operation of the fault protection arrangement where normal operation of the system may fail due to a fault which is correctable. Thus failure may be due to a program error in a microprocessor in the central unit which is detected by the first monitoring means which signals the microprocessor to reset at intervals. Operation of the fault protection arrangement is simplified if nevertheless the first monitoring means immediately enables the first override means when it detects failure of normal operation for any reason. In the case where this failure is due to a program error which is then successfully corrected, the first monitoring means will then disable the first override means and the processing and control means will then resume the application to each signalling link of successive voltage conditions which will therefore mean that the particular voltage condition associated with the default signal is immediately or very soon absent, which therefore results in the second monitoring means at each remote unit disabling the respective second override means so that the loads at the remote units are thereafter operated in normal manner.

The invention will now be described in more detail with reference to the accompanying drawings, in which

Figure 1, which has already been described above in relation to a known system, also serves as an overall schematic diagram applicable to the system of the invention, and

Figure 2 shows details of the system of Figure 1 incorporating the features of the invention.

Referring now to Figure 2, the central unit 10 includes processing and control means 11, first monitoring means 12 and first override means 13. 30 volt and 5 volt switched mode power supplies 141, 142 in the power supply means 14 are fed by a battery +V which is 12 volts in an automotive vehicle electrical system. In normal operation of the system the power supplies 141, 142 operate a custom unit 15 and a microprocessor 16 connected thereto in the procesing and control means 11. Each low current signalling link 40 to a remote unit 20 has two data lines 41, 42 to each of which the processing and control means 11 applies an operation voltage in pulse form during normal operation of the system. Each data line 41 is a clock pulse line with the respective operation voltage in pulse form constituting clock pulses of 30 volts amplitude which are applied to that line 41 across a resistor R1 by a clock driver transistor TR1 controlled within the custom unit 15. Between clock pulses the respective transistor TR1 is turned on to apply the fixed voltage supply of 30 volts to the line 41 and during each clock pulse the transistor TR1 is turned off to apply zero volts to the line 41. The clock pulses control the timing of the system time slot assignment multiplex. Each data line 42 is a signal line, and in each time slot a respective signal driver transistor TR2 controlled within the custom unit 15 applies to that signal line 42 zero volts or the fixed voltage supply of 30 volts via a resistor R2.

In normal operation of the system the processing and control means 11 applies to each signalling link 40 successive voltage conditions each selected from a set of normal voltage conditions. This set consists of (i) clock high and signal low, which is applied during powering up and powering down of the system, which may be applied during a normal interval between bursts of clock pulses and which may be applied between clock pulses within each burst (ii) clock high and signal high, which may be applied during a normal interval between bursts of clock pulses and which may be applied between clock pulses within each burst, (iii) clock low and signal high, which may be applied during each clock pulse and (iv) clock low and signal low which may alternatively be applied during each clock pulse.

In each remote unit 20, one of which is shown in Figure 2, a 30 volt power supply 21 is derived from the clock pulses on the line 41 during normal operation of the system. A demultiplexing unit 22 has timing circuits 23 responsive to the clock pulses on the line 41 and from which switches 24 are operated to connect the signal line 42 of the low current signalling link through a corresponding demultiplexer channel in the appropriate time slot. Each remote unit 20 can connect for example sixteen channels, five of which are shown in Figure 2. In this case a burst of sixteen clock pulses may define the sixteen time slots, for example each of 300 μs duration and each separated by 100μs, with each burst of clock pulses occupying 6.4ms at the beginning of a frame period of 10ms and there being a normal interval of 3.6ms between the bursts.

A variable resistor sensor 50 is shown wired to one of the channels in the remote unit 20. With the sensor 50 connected in the signal line 42 during the appropriate time slot and the transistor TR2 in the central unit 10 turned off during that time slot, then the voltage on the signal line 42 is an input signal from the sensor 50 due to its resistance, and this input signal is detected via an analogue-to-digital converter 17 in the central unit 10.

A manually operable electrical toggle switch 60 is shown wired to another one of the channels in the remote unit 20. With the switch 60 connected in the signal line 42 during its appropriate time slot and the transistor TR2 in the central unit 10 turned off during that time slot, then the voltage on the signal line 42 due to the resistance between the two terminals of that switch 60 is detected via the analogue-to-digital converter 17 in the central unit 10 as a respective first or second condition of a binary input signal from that switch 60.

Three other channels in the remote unit 20 are shown each connected in the remote unit to a respective output circuit 25. In normal operation of the system, the state of the transistor TR2 during the appropriate time slot will provide an output signal on the signal line 42 to power switching means 26 in the respective output circuit 25 to control a high current from the battery +V via a fuse 30 to a respective load, for example an engine ignition feed 70 or a headlight 71 or a fuel pump 72, wired to the remote unit 20. The microprocessor 16 in the central unit 10 ensures that the output signal on a signal line 42 to control a high current to a particular load 70, 71, 72 connected to any one of the remote units 20 is in response to an input signal from a particular switch 60 which is to be associated with that load 70, 71, 72 and is connected to any one of the remote units 20.

The low currents in the low current signalling links of the system, for example through the signal line 42 when it includes a switch 60 may be, for example, not greater than 5mA. The high currents through the loads of the system, for example to one of the loads 70, 71, 72 controlled in response to a switch 60 may be, for example, up to 10 amps.

The remote unit 20 also includes second monitoring means 80 and second override means 90. The constitution and operation of the first monitoring means 12 and first override means 13 in the central unit 10 together with the second monitoring means 80 and second override means 90 in the remote unit 20 to provide fault protection for the system is described below.

The first monitoring means 12 and the first override means 13 in the central unit 10 are operated by the 12 volt battery + V via a simple regulating unit 18.

The first monitoring means 12 includes a retriggerable monostable circuit M which outputs a continuous low level to one input 121 of an OR gate G1 when an "OK" pulse signal is being transmitted on line 161 from the microprocessor 16 at regular intervals and at an appropriate frequency during normal operation of the processing and control means 11. The software of the microprocessor 16 is arranged so that a fault in its operation leads to a disruption of the "OK" signal on the line 161 which is detected by the monostable circuit M failing to retrigger and hence providing a high level to the input 121 of the OR gate G1 which thus outputs a high level to a first input 122 of an AND gate G2. The fault in the software operation may be due to a fault originating in the microprocessor itself or may be due to a fault originating in another part of the central unit 10, for example in the 5 volt power supply 142. In any case, disruption of the "OK" signal on the line 161 constitutes a predetermined failure condition of means within the central unit 10.

Via another input 123, the OR gate G1 may be arranged to detect some predetermined failure condition of means within the central unit 10 directly rather than via the microprocessor 16. This may be for example the failure of any one of the clock driver transistors TR1 to provide clock pulses to its respective clock line 41, or failure of the 5 volt power supply 142 or failure of the 30 volt power supply 141.

The AND gate G2 has a second input 124 to which is applied a "system active" signal. The system has a sleep mode in which the power supply means 14 in the central unit 10 are turned off, as well as an active mode in which the power supply means 14 are turned on to operate the processing and control means 11, this being a known power conservation feature of such battery operated systems. In this case a "system active" signal is produced in the central unit 10 and is applied to the input 124 of the AND gate G2 as a high level when the system is intended to be in its active mode and as a low level when the system is intended to be in its sleep mode. Thus a high output of the OR gate G1 when the system is intended to be active does result in a high output of the AND gate G2 indicating a failure of normal operation of the processing and control means 11, whereas a high output of the OR gate G1 which is due to the system being in its sleep mode does not result in a high output of the AND gate G2. A filter F removes any ambiguous output from the AND gate G2 when the system transfers from the active mode to the sleep mode.

The first override means 13 causes a default signal to be applied to each signalling link 40 when enabled by the first monitoring means 12 responsive to failure of normal operation of the processing and control means 11. The first override means 13 includes a further power supply means 131 in the form of a 30 volt switched mode power supply which is fed by the battery + V and which is turned on by a high output from the AND gate G2 on the line 132. The first override means 13 also includes a respective diode D1 connected from the output of the further power supply 131 directly to the clock pulse line 41 of each signalling link 40, and a respective diode D2 and resistance R3 in series connected from the output of the further power supply 131 to the control electrode of the driver transistor TR2 for the signal line 42 of each signalling link 40. Thus when the further power supply 131 is turned on it applies continuous 30 volts directly to the clock pulse lines 41, and it turns on the transistors TR2 so that they apply continuous zero volts to the signal lines 42. Clock high and signal low is one of the normal voaltage conditions (i) which can be applied to each signalling link 40 during normal operation as has been described above, and when this condition has at least a predetermined duration which is longer than can occur during normal operation of the system it is a default signal. If this voltage condition (i) is applied during powering up and powering down of the system for less than the normal interval between bursts of clock pulses then this voltage condition (i) cannot occur for longer than that interval (3.6ms) during normal operation and the predetermined duration defining a default signal may be just longer than this (say 8ms) by a safety margin. If powering up and powering down takes longer than this normal interval the predetermined duration may be made longer as necessary. It may be mentioned that powering up and powering down could instead use voltage condition (ii), i.e. clock high and signal high in which case its duration would be independent of the duration defining a default signal.

It may be mentioned that if the failure condition of means within the central unit 10 which is detected by the first monitoring means 12 is a failure of the 30 volt power supply 141, then this failure of the 30 volts normally supplied to the collectors of the signal line driver transistors TR2 will not prevent the 30 volt output of the further power supply 131 causing zero volts to be applied to the signal lines 42. Furthermore the first override means 13 could be arranged to apply zero volts directly to the signal lines 42. This could be achieved by providing within the first override means 13 an extra transistor fed by the further power supply 131 and having a collector electrode which goes to zero volts when the transistor is turned on, this zero volts being applied by a respective reverse diode directly to each signal line 42.

It may also be mentioned that if it is not considered necessary to provide for failure of the 30 volt power supply means 141, then the further power supply means 131 need not be provided in the first override means 13 which would instead include means responsive to a high output of the AND gate G2 to apply 30 volts from the power supply 141 to the diode D1 and D2.

The second monitoring means 80 and the second override means 90 in the remote unit 20 are operated by the 30V power supply 21 which is derived from the clock pulses on the line 41 during normal operation of the system and is otherwise maintained by the 30 volts applied to the line 41 as part of a default signal.

In the second monitoring means 80, detecting and timing means are provided which are responsive to the presence on the respective signalling link 40 of a default signal, that is to say clock high and data low for at least said predetermined duration of say 8ms. The detecting and timing means consists of a NAND gate 81 having one input connected to the clock line 41 and another, inverting, input connected to the signal line 42, the output of the NAND gate 81 being connected to a resistor R4 and capacitor C in series, with a diode D3 across the resistor R4. Thus the output of the NAND gate 81 is high and charges the capacitor C when the normal operation conditions (ii), (iii) and (iv) mentioned above are on the signalling link 40, and the output of the NAND gate 81 is low and discharges the capacitor C only when the normal voaltage condition (i) mentioned above, that is clock high and signal low, is on the signalling link 40. The time constant of resistor R4 and capacitor C, with diode D3, is such that during normal operation of the system the capacitor C is maintained charged and the output 82 of the second monitoring means 80 is maintained high. Only a default signal on the signalling link 40, that is say the presence of clock high and signal low for longer than can occur during normal operation, results in the capacitor C becoming discharged and the output 82 being low.

The second override means 90 includes two inverters 13 and 14 connected in series to the output 82 of the second monitoring means 80. The output of the inverter 13 is connected by a respective forward diode D4 to the respective power switching means 26 which operates one of the loads 70, 71 and the output of the inverter 14 is connected by a reverse diode D5 to the power switching means 26 which operates the load 72. Thus in normal operation of the system, with the output 82 high, the outputs of the inverters 13, 14 are isolated from the power switching means 26 by the diodes D4, D5. Responsive to default signal detection by the second monitoring means 80, the output 82 is low and the second override means 90 is thereby enabled to set each of the three power switching means 26 to a predetermined state, that is to say that the power switching means 26 which operate the loads 70 and 71 are set to a turned on state and the power switching means 26 which operates the load 72 is set to a turned off state.

Thus in the example of an automotive vehicle electrical system, in response to failure of normal operation of the processing and control means 11 in the central unit 10 the ignition feed 70 and the headlight 71 may be maintained on and the fuel pump 72 may be maintained off if these are required critical loads and these are the safe states in which they are required to be maintained. By providing respective second monitoring means and second override means at any remote unit 20, loads connected to that remote unit may be controlled in response to a default signal from the central unit 10. Any number of the loads, possibly all of them, which are controlled by the central unit processing and control means in normal operation of the system may be considered as critical loads which can be put into a predetermined safe state, either on or off, upon failure of normal operation. Some remote units of the system may only have switches or sensors connected to them, or loads connected to them which are not critical and therefore not set in response to the default signal.

Referring back to the first monitoring means 12, this also includes a reset oscillator R which is activated by a high output of the AND gate G2 so as to apply reset pulses to the microprocessor 16 via line 162 at intervals long enough such that if the microprocessor 16 recovers it will transmit the "OK" signal on the line 161 before being reset again. The first monitoring means 12 could be arranged so that it is inhibited from enabling the first override means 13 for a preset interval if the microprocessor reset operation is in process via the line 162. However, operation of the fault protection arrangement for the system is simplified if, as described above, the first monitoring means 12 immediately enables the first override means 13 when it detects failure of normal operation for any reason. If as a result of the reset signals on the line 162 or for any other reason the system recovers and the OR gate G1 output changes from high to low, then the resulting low output of the AND gate G2 will inhibit the reset oscillator R and will disable the first override means 13. The processing and control means 11 will then resume the application to each signalling link 40 of successive normal voltage conditions which will therefore mean that the particular normal voltage condition (i) associated with the default signal is immediately or very soon absent, which therefore results in the second monitoring means 80 at each remote unit 20 disabling the respective second override means 90 so that the loads at the remote units are thereafter operated in normal manner.

The fault protection system consisting of extra hardware, the monitoring and override means, provided at the central unit and at the remote units enables the satisfactory use of a single microprocessor 16 at the central unit 10 having only the resetting protection as described. However, if desired, this hardware fault protection may be used together with duplication or partial duplication of the microprocessor at the central unit.

The information handling and control system having fault protection according to the invention can have application other then to automotive vehicle electrical systems, for example to domestic appliances such as washing machines or to industrial control systems such as for heating and ventilation.

## Claims

1. An information handling and control system comprising a central unit (10) and a plurality of remote units (20) each connected to the central unit by a respective signalling link (40), wherein the central unit includes processing and control means (11), wherein the remote units each include at least one power switching means (26) each for operating a respective load (70,71,72), and wherein in normal operation of the system the processing and control means controls all the power switching means via the signalling links, characterized in that the central unit (10) includes first monitoring means (12) for detecting a predetermined failure condition of means within the central unit, said failure condition indicating failure of normal operation of the processing and control means (11), the central unit includes first override means (13) for causing a default signal to be applied to each signalling link (40) when enabled by the first monitoring means responsive to said failure condition detection, each remote unit (20) includes respective second monitoring means (80) for detecting the default signal on the respective signalling link, and each remote unit (20) includes respective second override means (90) for setting at least one said power switching means (26) at that remote unit to a predetermined state when enabled by the second monitoring means (80) responsive to said default signal detection.

2. A system as claimed in Claim 1,wherein the system is operable by battery means (+V) when connected to the central unit and to the remote units, wherein the central unit includes power supply means(14) for operating the processing and control means (11) in normal operation of the system, and wherein the first override means (13) includes further power supply means (131) which are turned on by the first monitoring means (12) responsive to said failure condition detection.

3. A system as claimed in Claim 1 or Claim 2, wherein in normal operation of the system the processing and control means (11) applies to each signalling link (40) successive voltage conditions each selected from a set of normal voltage conditions, wherein the default signal consists of a predetermined one of the normal voltage conditions having at least a predetermined duration which is longer than can occur during normal operation of the system, and wherein each second monitoring means (80) includes detecting and timing means (81,D3,R4,C) responsive to the presence on the respective signalling link of said predetermined one of the normal voaltage conditions for said predetermined duration.

4. A system as claimed in Claim 3, wherein each signalling link (40) includes a clock pulse data line (41), wherein in normal operation of the system the processing and control means (11) applies bursts of clock pulses to the clock pulse data lines with a normal interval betwen said bursts, and wherein said predetermined duration associated with the default signal is longer than said normal interval.

5. A system as claimed in Claim 3 or Claim 4, wherein the first override means (13) causes said predetermined one of the normal voltage conditions associated with the default signal to be continuously applied to each signalling link (40) only for so long as the first monitoring means (12) continuously detects said failure condition, and wherein, upon restoration of normal operation of the processing and control means (11), the second monitoring means (80) at each remote unit disables the respective second override means (90) responsive to the absence on the respective signalling link of said predetermined one of the normal voltage conditions.

6. An automotive vehicle electrical system including an information handling and controlsystem as claimed inany previous claim.

8

Fig. 2a.

Fig.2b.

Fig.1.